# EUROPÄISCHE PATENTSCHRIFT

(11) **EP 2 177 489 B1**
(45) Veröffentlichungstag und Bekanntmachung des Hinweises auf die Patenterteilung: **07.11.2012**
(21) Anmeldenummer: 08017140.8
(22) Anmeldetag: 29.09.2008
(51) Int. Cl.: C04B 18/28, C04B 28/02, C04B 18/24, C04B 22/14

(54) **Baustoff mit pflanzlichem Zuschlag**
Construction material with filler of vegetable origin
Matériau de construction comprenant un additif d'origine végétale

(43) Veröffentlichungstag der Anmeldung: 21.04.2010
(73) Patentinhaber: Höhn, Inge, 9391 Reisdorf (LU); Höhn, Heribert, 9391 Reisdorf (LU)
(72) Erfinder: Höhn, Inge, 9391 Reisdorf (LU); Höhn, Heribert, 9391 Reisdorf (LU)
(74) Vertreter: Sperling, Thomas

(56) Entgegenhaltungen:
- EP-A- 1 908 739
- WO-A-2004/037742
- CH-A- 203 902
- DD-A1- 267 722
- DE-U1- 29 617 394
- GB-A- 2 077 317
- US-A- 1 407 608
- US-A- 1 723 989

## Beschreibung

### Techniches Gebiet

Die vorliegende Erfindung betrifft ein Verfahren zur Herstellung eines Baustoffs mit pflanzlichem Zuschlag, Zusammensetzung für deren Herstellung, sowie die so erhältlichen Baustoffe und deren Verwendung als Fertigbauteile.

### Stand der Technik

im Stand der Technik sind vielfältige Kombinationen auf der Grundlage pflanzlicher Rohstoffe bekannt. Einerseits wird das Bauwesen durch den Einsatz derartiger Rohstoffe innovativ und ökolgisch : Mensch und Natur werden dank ressourcenschonender und gesundheitsfreundlicher Baustoffe das Problem auf, optimal ausgeglichene Eigenschaften (niedriges spezifisches Gewicht, Wärmeleitfähigkeit bzw. Wärmedurchgangskoeffizient, Schallisolierung, Biege-, Druck- und Zugfestigkeit, sowie Beständigkeit (Alterungsprozess)) zu erzielen.

Außerdem, damit solche innovativen Produkte sich im Markt durchzusetzen können müssen sie so wirtschaftlich wie möglich sein, d.h. sowohl deren Herstellung als auch deren Anwendung muss wirtschaftlichen Erwägungen in Bezug auf Anschaffungs- und Benutzungskosten standhalten.

Das größte Problem beim Verarbeiten von pflanzlichen Rohstoffen ist seit jeher die Verbindung zwischen den Pflanzlichen Bestandteilen und den mineralischen Bestandteilen, z.B. dem Bindemittel (Zement).

Früheres wie z.B. in EP1908739 A1 dargelegtes Verfahren beruht auf einer Mineralisierung des pflanzlichen Zuschlags mit Hydratkalk, (Weißkalk). Der Nachteil dieses Verfahrens ist : Hoher Preis, größere Verbrauchsmengen/m³.

Unstrittig scheint zu sein, dass ein sogenannter Mineralisator, d.h. ein Kompatibilisierungs- oder Verträglichkeitsmittel zwischen organischen und mineralischen Bestandteilen, nötig ist um die gewünschten Eigenschaften des Endproduktes zu erreichen.

Was die Natur und die Zusammensetzung eines solchen Mineralisatores, sowie dessen Anwendung betrifft, wurden folglich unzählige Lösungen vorgeschlagen, deren Durchbruch in der Industrie jedoch größtenteils ausblieb, entweder weil sich nicht die erforderten Eigenschaften erreichen ließen, oder weil die Anwendbarkeit auf einige wenige Anwendungen beschränkt blieb, oder aber weil das Verfahren nicht betrieben werden konnte.

Im Stand der Technik wurden üblicherweise Aluminiumsulfat und Cefkaform zur Vormineralisierung verwendet, jedoch sind die Mineralisatoren weder ökologisch vertretbar, noch vereinbar mit der Anforderung für preiswerte Baustoffe. Außerdem ist der in diesem Fall erforderte Trocknungsschritt der vormineralisierten pflanzlichen Rohstoffe unwirtschaftlich.

Das oben erwähnte Verfahren bei dem Kalkhydrat als Mineralisator eingesetzt wird, ergibt Baustoffe die den Anforderungen an die Festigkeit nicht immer genügen. Außerdem bei den erforderlichen Mengenangaben nicht sehr wirtschaftlich und am Markt derzeit nicht zu platzieren.

Außerdem weiß man, dass bei der Härtungsreaktion von zementbasierenden Mischungen außer Calciumsilikat und Calciumaluminat auch das alkalische Calciumhydroxid entsteht, welches für eine gute korrosionshemmende Wirkung des Zements gegenüber Stahl verantwortlich ist.
Aus der GB 2 077 417 A geht ein Verfahren zur Herstellung von Baustoffen durch Mischen von Zellulosefasern, Gips und Zement hervor, wobei als Gips gipshaltiger Abfall aus der Phosphat-Industrie oder als unkalzinierter Gips eingesetzt wird.

Die zahlreichen Versuche und Bemühungen Beton und andere Baustoffe mit pflanzlichen Zusätzen herzustellen und so bessere Wärme-und Schalldämmungswerte bei gleichzeitiger ressourcenschonender und ökologischer Verwertung von Rohstoffen zu erreichen, veranschaulicht den Bedarf an solchen vorteilhaften Produkten.

### Aufgabe der Erfindung

Eine Aufgabe der vorliegenden Erfindung ist es folglich die Herstellung von Baustoffen, wie Beton und Mörtel, auf Basis eines pflanzlichen Zuschlags einfacher und billiger zu gestalten, wobei der ausgehärtete Baustoff ein relativ geringes spezifisches Gewicht, sowie gute Eigenschaften betreffend Wärmedämmung, Schallisolierung, Biegefestigkeit und Druckfestigkeit aufweisen soll.

### Allgemeine Beschreibung der Erfindung

Diese Aufgabe wird erfindungsgemäß gelöst durch ein Verfahren gemäß Patentanspruch 1 gelöst.

Ein Verfahren zur Herstellung von Baustoffen mit pflanzlichem Zuschlag, umfasst das Mischen
(a) des gegebenenfalls zerkleinerten pflanzlichen Zuschlags,
(b) eines Mineralisators,
(c) eines Bindemittels auf Zementbasis, und
(d) des Anmachwassers,
wobei der Mineralisator aus gipshaltigem Gestein besteht.

Wie oben bereits angedeutet, ist die notwendige Grundlage für eine gute Effizienz und Funktionszuverlässigkeit eines Baustoffes mit pflanzlichem Zuschlag im Laufe der Zeit, dass letzterer mit dem Bindemittel optimal verbindet. Dabei spielen verschiedene Faktoren eine bedeutende Rolle. Zu diesen Faktoren gehören die Wahl des Mineralisators hinsichtlich Struktur und Zusammensetzung, sowie die vom pflanzlichen Zuschlag aufzuweisende Restfeuchtigkeit.

Als Mineralisator wird im erfindungsgemäßen Verfahren gipshaltiges Gestein bevorzugt mit bis zu 30 % Quarzanteil in Pulverform, Durchmesser 0 - 0,3 mm verwendet.

Es wurde festgestellt, dass das gipshaltige Gestein in Kombination mit hydraulischem Bindemittel, wie Zement, und Pflanzen die Vebindung der mineralischen Phase zum pflanzlichen Zuschlag erheblich verbessert.

Ein weiterer Vorteil der Erfindung ist ein schnelleres Abbindeverhalten der angerührten Baustoffe, was sich natürlich wirtschaftlich positiv auf die Produktionskosten auswirkt.

Der gegebenenfalls zerkleinerte pflanzliche Zuschlag kann im Prinzip je nach Anwendung des Baustoffes aus praktisch jeder Pflanze gewonnen werden, bevorzugt aus schnell nachwachsenden Pflanzen, wie Miscanthus und andere Schilfarten, Holz, wie z. B. Nadelholz, Gräser, wie Switchgras oder Raigras, Zuckerrohr, Topinambur, Hanfschäben, Hanffasern, Flachs, Stroh, Palmenrispen oder deren Mischungen, wobei je nach Pflanzenart und -teil Fasern, Späne, Körner, Splitter oder sonstige Partikel Verwendung finden.

Der pflanzliche Zuschlag wird falls nötig zerkleinerte, wobei entsprechende bekannte Sieblinien eingesetzt werden. Welche Partikelform und -größe vorzuziehen bzw. zu wählen ist, wird in Anbetracht der beabsichtigten Anwendungen der Baustoffe entschieden. Der pflanzliche Zuschlag setzt sich beispielsweise aus faserigen Teilchen mit einem Durchmesser von 0 bis 5,0 mm zusammen. Soll ein Leichtbeton oder Leichtestrich hergestellt werden, so ist es von Vorteil, wenn sich der pflanzliche Zuschlag zum größten Teil aus faserigen Teilchen mit der Länge von 5 mm bis 40 mm zusammensetzt. Soll z. B. ein Leichtputz oder Wärmedämmputz hergestellt werden, so ist es von Vorteil wenn sich der pflanzliche Zuschlag zum größten Teil aus faserigen Teilchen mit einer Länge unter 5 mm zusammensetzt.

Es ist vorteilhaft wenn der pflanzliche Zuschlag relativ trocken ist, dass heißt je nach Pflanzenart und -teil mit der Restfeuchte von ca. 5 bis 15 % bevorzugt von bis 15 %, besonders bevorzugt von ca. 15 %. Miscanthus, Hanf und Stroh z. B. weisen bei der Ernte diese bevorzugte Restfeuchte auf, so dass es nicht nötig ist, sie vorher zu trocknen.

Es konnte festgestellt werden, dass das spezifische Gewicht der so vorbereiteten pflanzlichen Basis verschiedenster Beimischungen (also generell bei einer Restfeuchte von ca. 10 bis 15 %) zwischen ca. 70 und ca. 160 kg/m³ liegt. Beispielsweise weist Nadelholz ein spezifisches Gewicht von ca. 140 kg/m³, Miscanthus von ca. 120 kg/m³, Topinambur von ca 80 kg/m³ und Stroh von ca. 70 kg/m³ bei einer Restfeuchte von ca. 10 bis 15 % auf.

Vorteilhafterweise, können die erfindungsgemäßen Baustoffe durch ein einfaches Verfahren hergestellt werden, wobei der ggf. zerkleinerte pflanzliche Zuschlag (a), der Mineralisator (b), das Bindemittel (c) und das Anmachwasser (d) im wesentlichen zugleich oder zeitnah zusammengemischt werden. Die Reihenfolge ist dabei zweitrangig, kann sich aber je nach Mischart oder Mischtyp leicht unterscheiden.

Je nach pflanzlichem Zuschlag und den Anforderungen an den Baustoff kann es vorteilhaft sein eine Variante des Verfahrens zu verwenden, wobei zuerst der ggf. zerkleinerte Pflanzliche Zuschlag (a), der Mineralisator (b), und ein Teil des Anmachwassers (d) während einer Vormischdauer zusammengemischt werden, bevor das Bindemittel (c) und der Rest vom Anmachwasser (d) eingemischt werden, z.B. in einem Ringtrogmischer mit Wirbler.

In dieser Variante des Verfahrens, beträgt die Vormischdauer generell ca. 0,2 Minuten, bevorzugt ca. 0,1 bis ca. 0,2 Minuten. Es wurde festgestellt, dass während dieser sogenannten einleitenden Mineralisierung in Abwesenheit vom Bindemittel eine noch bessere Anbindung der organischen Phase an die mineralische Phase ermöglicht wird. Nach Einbringen des restlichen Anmachwassers wird die Baustoffmischung noch während ein paar Minuten, bevorzugt ca. 1 bis ca. 2 Minuten weitergemischt, wonach die Baustoffmischung bereit zur Verarbeitung ist.

Das Bindemittel auf Zementbasis ist ein hydraulisches Bindemittel und kann jede Art von hydraulischem Zement sein, bevorzugt ist jedoch Portlandzement, speziell der Güte 52.5. , oder Portlandkalkzement der Güte 52.5.

In einem typischen erfindungsgemäßen Verfahren verwendet man, pro Kubikmeter des pflanzliche Zuschlages (a), ca. 220 bis 260 kg Bindemittel auf Zementbasis (c), vorzugsweise Portlandzement der Güte 52.5, ca. 38 bis 40 kg Mineralisator (b) oder Portlandkalktzement der Güte 52.5 und ca. 24 kg Mineralisator und ca. 300 bis 350 Liter Anmachwasser (d), je nach gewählter Konsistenz.

Die oben angegebenen Inhaltsstoffe (a), (b) und (c) können auch für den industriellen oder privaten Endverbraucher als Fertigzusammensetzung fertig vorgemischt und in kleineren oder größeren Einheiten verpackt werden (z.b. (a)+(b)+(c) zusammen, nur (a)+(b), oder als Kit mit einerseits (a)+(b) und andererseits (c)), wobei die Zusammensetzungen je nach Art des zu erhaltenden Baustoffes (z.B. Putz, Mörtel, Leichtbeton, usw.) abgestimmt werden (siehe auch untenstehende Beispiele). Diese Fertigzusammensetzungen können dann durch den Endverbraucher mit der auf der Verpackung angegebenen Menge an Anmachwasser (d) angerührt und anschließend verarbeitet werden.

Bei der Herstellung der oben genannten Trockenmischungen sollten die Rohstoffe eine Restfeuchte von 2 bis 2,5 % haben um eine Lagerung von mindestens drei Monaten zu gewährleisten.

Die Verarbeitung kann wie bei herkömmlichen Bauststoffen erfolgen, oder auch durch andere Verfahren wie Extrusion, usw.

Die durch das erfindungsgemäße Verfahren hergestellte Baustoffe eignen sich hervorragend für die Herstellung von ökologischem und wärmedämmendem Leichtbeton, Mörtel für Innen- und Auβenputz, Estrichen und schwimmenden Estrichen, sowie ökologischen und wärmedämmenden Fertigteilwandelementen, Bausteine, kartonbeschichteten Dämmplatten. Diese Produkte finden ihre Anwendung sowohl in ökologischen Neubauten von z.B. Ein- oder Mehrfamillienhäusern, wie bei der Sanierung von bereits bestehenden Gebäuden, z.B. bei der nachträglichen Trittschallisoilierung von Holzdecken, wobei auch das relativ geringe Eigengewicht des fertigen Produktes (je nach Zusammensetzung 350 bis 700 kg/m³) zur Geltung kommt.

Die erfindungsgemäßen Baustoffe können übliche Inhaltsstoffe enthalten, je nach Verwendung, je nach beabsichtigter Verwendung. Als Beispiel können (ökologisch vertretbare) Beschleuniger, Verzögerer, Luftporenbildner, ... genannt werden. Wobei sich Topinambur als hochwirksamer wärmedämmender Zuschlag herrvoragend eignet.

Weitere Einzelheiten und Vorteile der Erfindung können der nachfolgenden ausführlichen Beschreibung möglicher Ausführungsformen der Erfindung entnommen werden.

### Beschreibung mehrerer Ausgestaltungen der Erfindung

Bei den nachstehend zur Illustration beschriebenen Beispielen können die bereits gennanten Rohstoffe, wie : Miscanthus, Hanfschäben, Hanffasern, Nadelholz, Topinambur, Stroh, Zuckerrohr auf Grund des materialverträglichen Mineralisators kompatibel miteinander benutzt werden, mit Volumengewichten von 70 bis 140 kg/m³, je nach gewünschten Produkten.

### Beispiel (A): Auβenwände

(a) Pflanzlicher Miscanthus, Hanfschäben, Topinambur, Faserlängenbereich ca. [0-35] mm
(b) Mineralisator: gipshaltiges Gestein 0,003 mm bei PZ 52.5 = 38 bis 40 kg/m³, bei PKZ 52.5 = 24 kg/m³
(c) Bindemittel: Potlandzement PZ 52.5, Menge: ca. 220 bis 260 kg, Vorzugsweise 240 kg, oder Potlandkalkzement sonst wie vor
(d) Anmachwasser: Menge: ca. 300 bis 350 kg, vorzugsweise 300 kg

### Beispiel (B): Schnellbauplatten

(a) Pflanzlicher Zuschlag: Mischung aus Miscanthus und Topinambur
   Miscanthus: Faserlänge ca. [0-2] mm,
   Topinambur: Faserlänge ca.(A);
(b) Mineralisator: wie (A); b
(c) Bindemittel: wie (A); c
(d) Anmachwasser: wie (A); d

### Beispiel (C): Absorptionsschichten für Schallschluckwände

(a) Pflanzlicher Zuschlag ⅓ Miscanthus, ⅓ Nadelholz, ⅓ Topinambur, Faserlänge 3 bis 35 mm
(b) Mineralisator: wie (A) ; b
(c) Bindemittel: wie (A); c
(d) Anmachwasser : gleiche Menge wie Beispiel (A)

### Beispiel (D): Innenputz

(a) Pflanzlicher Zuschlag : ⅓ Miscanthus; ⅓ Hanfschäben; ⅓Topinambur; Faserlängenbereich [0-2,5] mm
(b) Mineralisator: wie (A); b
(c) Bindemittel: wie (A); c
(d) Geschmeidigmacher: 60 kg Hydratkalk/m³
(e) Anmachwasser: 350 bis 400 Itr/m³

### Beispiel (E): Außenputz

(a) Planzlicher Zuschlag : ²/₃ Miscanthus, ⅓ Topinambur
(b) Mineralisator: wie (A) ; b
(c) Bindemittel: wie (A); c
(d) Geschmeidigmacher: wie (D); d
(e) Anmachwasser: wie (D); e

Aus der Analyse der Werte die anhand dieser Beispiele verzeichnet wurden und sich immer bestätigt haben kann festgestellt werden, dass unabhängig von der Anwendungsgruppe innerhalb welcher der Baustoff einzureihen ist, der Mineralisator in relativ geringen Mengen benutzt werden kann.

Die Proportionen der Komponenten des Baustoffes, insbesondere des Bindemittels zu dem Mineralisator, bzw. des Mineralisators zu dem pflanzlichen Zuschlag führen zu einem perfekten Kompromiss gemäss welchem eine hervorragende Klebefähigkeit des pflanzlichen Zuschlags mit dem Bindemittel und ausgezeichnete Eigenschaften hinsichtlich Druckfestigkeit, Biegezugfestigkeit, Wärmeleitfähigkeit, Schaldämmung und Gewicht erzielt werden.

So ergaben nach 28 Tagen durchgeführte Messungen an dem erfindungsgemäßen Baustoff hergestellten Proben von Außenwänden eine Wärmeleitfähigkeit λ unter 0,05 W/(m.K)) (zum Vergleich erreichen Styropor einen λ-Wert von 0,04 und Hochlochziegel-Porotonsteine einen λ-Wert von 0,36).
Bei 30 cm dicken Wänden erreichte der Wärmedurchgangskoeffizient U = 0,16 W/(m².K), was
die Anforderungen an den Wärmeschutz der Wände von Niedrigenergiehäusern erfüllt.

Das Gewicht von mit dem erfindungsgemäßen Baustoff hergestellten Schnellbauplatten (siehe oben, Beispiel (B)) mit den Maßen (L = 2500 mm, B = 1250 mm, D = 13 mm) beträgt, inklusive Spezialkartonpapier und nach Abzug des austrocknenden Wassers, ca. 20 kg. Dies entspricht also einem Gewicht von ca. 7 kg/m², also ca. ²/₃ des Gewichtes einer Rigisplatte (10 kg/m²).

Schlieβlich wurde die Druckfestigkeit der Außenwände (siehe oben, Beispiel (A)) gemessen. Werte von 1,5 bis 9,43 N/mm², wurden verzeichnet. Die Biegezugfestigkeit beträgt ca. 3,64 N/mm².

## Patentansprüche

1. Verfahren zur Herstellung von Baustoffen mit pflanzlichem Zuschlag, umfassend das Mischen
(a) 1000 l des gegebenenfalls zerkleinerten pflanzlichen Zuschlags,
(b) eines Mineralisators 20 % bei Portlandzement 52.5 oder 10 % bei Portlandkalkzement 52.5 und
(c) 220 bis 260 kg Bindemittel auf Zementbasis,
wobei der Mineralisator aus gipshaltigem Gestein besteht und dass das gipshaltige Gestein bis zu 30 % Quarz in Pulverform enthält.

2. Verfahren nach Anspruch 1, wobei der gegebenenfalls zerkleinerte pflanzliche Zuschlag (a), der Mineralisator (b), das Bindemittel (c) und das Anmachwasser (d) im wesentlichen zeitgleich zusammengemischt werden.

3. Verfahren nach Anspruch 1, wobei zuerst der gegebenenfalls zerkleinerte pflanzliche Zuschlag (a), der Mineralisator (b) und ein Teil des Anmachwassers (d) während einer Vormischdauer zusammengemischt werden, bevor das Bindemittel (c) und der Rest vom Anmachwasser (d) eingemischt werden.

4. Verfahren nach Anspruch 3, wobei die Vormischdauer von 0,2 bis 3 Minuten, bevorzugt von 0,5 bis 1,5 Minuten beträgt.

5. Verfahren nach einem der Ansprüche 1 bis 4, wobei der zerkleinerte pflanzliche Zuschlag, wie Miscanthus und andere Schilfarten, Holz, wie z. B. Nadelholz, Gräser, wie Switchgras oder Raigras, Topinambur, Zuckerrohr, Hanfschäben, Hanffasern, Flachs, Stroh, Palmenrispen oder deren Mischungen, gewonnen wird, wobei je nach Pflanzenart und -Teil Fasern, Späne, Körner, Splitter oder sonstige Partikel verwendet werden, und wobei der zerkleinerte pflanzliche Zuschlag ein spezifisches Gewicht von 70 bis 160 kg/m³ besitzt.

6. Verfahren nach einem der Ansprüche 1 bis 5, wobei der zerkleinerte pflanzliche Zuschlag eine Restfeuchte von 5 bis 15 % aufweist.

7. Verfahren nach Anspruch 6, wobei der zerkleinerte pflanzliche Zuschlag eine Restfeuchte von 15 % aufweist.

8. Fertigzusammensetzung zur Herstellung von Baustoffen mit pflanzlichem Zuschlag nach einem Verfahren der Ansprüche 1 bis 7, enthaltend
(a) 1000 l pflanzlicher Zuschlag mit einem spezifischen Gewicht von 70 bis 160 kg/m³,
(b) Mineralisator 20 % bei Portlandzement 52.5 oder 10 % bei Portlandkalkzement 52.5 und
(c) 200 bis 260 kg Bindemittel auf Zementbasis
wobei der Mineralisator aus gipshaltigem Gestein besteht und dass das gipshaltige Gestein bis zu 30 % Quarz in Pulverform enthält.

9. Fertigzusammensetzung nach Anspruch 8, weiterhin enthaltend (d) 250 bis 400 l Anmachwasser.

10. Fertigzusammensetzung nach Anspruch 8 oder 9 zur Herstellung von Baustoffen, wie Leichtbeton, Leichtmörtel, Leichtestrich sowie Leichtputz und Wärmedämmputz, Außenwände für Wohnbauten, Schnellbaupiatten und Absorptionsschichten für Lärmschutzwände.

## Claims

1. A method for producing construction materials with plant additives, comprising the mixing of
(a) 1000 lof the plant additive, where necessary comminuted,
(b) of a mineraliser, 20 % for Portland cement 52.5 or 10 % for Portland limestone cement 52.5 and
(c) 220 to 260 kg cement-based binders,
wherein the mineraliser consists of gypsum-containing stone and the gypsum-containing stone contains up to 30 % in powder form.

2. The method according to Claim 1, wherein the where necessary comminuted plant additive (a), the mineraliser (b), the binder (c) and the tempering water (d) are mixed together substantially simultaneously.

3. The method according to Claim 1, wherein first the where necessary comminuted plant additive (a), the mineraliser (b) and some of the tempering water (d) are mixed in during a premixing time before the binder (c) and the remainder of the tempering water (d).

4. The method according to Claim 3, wherein the premixing time is from 0.2 to 3 minutes, preferably from 0.5 to 1.5 minutes.

5. The method according to one of Claims 1 to 4, wherein the comminuted plant additive, such as miscanthus and other reed species, wood, such as coniferous wood, grasses, such as switchgrass or ryegrass, Jerusalem artichoke, sugarcane, hemp shives, hemp fibres, flax, straw, palm panicles or mixtures thereof, is obtained, wherein fibres, shavings, grains, chippings or other particles are used depending on the plant species and part, and wherein the comminuted plant additive has a specific weight of 70 to 160 kg/m³.

6. The method according to one of Claims 1 to 5, wherein the comminuted plant additive has a residual moisture content of 5 to 15 %.

7. The method according to Claim 6, wherein the comminuted plant additive has a residual moisture content of 15 %.

8. A finished composition for producing construction materials having a plant additive according to a method of Claims 1 to 7, containing
(a) 1000 l plant additive with a specific weight of 70 to 160 kg/m³,
(b) mineraliser, 20 % for Portland cement 52.5 or 10 % for Portland limestone cement 52.5 and
(c) 200 to 260 kg cement-based binders,
wherein the mineraliser consists of gypsum-containing stone and the gypsum-containing stone contains up to 30 % in powder form.

9. The finished composition according to Claim 8, furthermore containing (d) 250 to 400 l tempering water.

10. The finished composition according to Claim 8 or 9 for producing construction materials such as lightweight concrete, lightweight mortar, lightweight screed and lightweight plaster and thermal insulation plaster, external walls for residential buildings, rapid construction boards and absorption layers for sound insulation walls.

## Revendications

1. Procédé de fabrication de matériaux de construction avec additif végétal, comprenant le mélange
(a) de 1000 l de l'additif végétal, broyé le cas échéant,
(b) d'un minéralisateur à 20 % pour le ciment Portland 52.5 ou à 10 % pour la chaux-ciment Portland 52.5 et
(c) de 220 à 260 kg d'agent liant sur base de ciment,
le minéralisateur étant constitué de roche gypsifère et la roche gypsifère contenant jusqu'à 30 % de quartz sous forme pulvérulente.

2. Procédé selon la revendication 1, l'additif végétal (a) broyé le cas échéant, le minéralisateur (b), l'agent liant (c) et l'eau de gâchage du mortier (d) étant mélangés ensemble sensiblement en même temps.

3. Procédé selon la revendication 1, d'abord l'additif végétal (a) broyé le cas échéant, le minéralisateur (b) et une partie de l'eau de gâchage (d) étant mélangés pendant une durée de prémélange avant de rajouter en mélangeant l'agent liant (c) et le reste de l'eau de gâchage (d).

4. Procédé selon la revendication 3, la durée de prémélange étant de 0,2 à 3 minutes, de préférence de 0,5 à 1,5 minutes.

5. Procédé selon l'une quelconque des revendications 1 à 4, l'additif végétal broyé tel que le roseau de Chine ou d'autres types de roseaux, du bois, tel que par ex. un conifère, des herbes telles que la switchgrass ou le raigras, du topinambour, de la canne à sucre, des chènevottes de chanvre, des fibres de chanvre, du lin, de la paille, des nervures de palmier ou des mélanges de ces derniers étant obtenus, en fonction du type de plante et de la partie de la plante, des fibres, des copeaux, des grains, des éclats ou d'autres particules étant utilisés et l'additif végétal broyé présentant un poids spécifique de 70 à 160 kg/m³.

6. Procédé selon l'une quelconque des revendications 1 à 5, l'additif végétal broyé présentant une humidité résiduelle de 5 à 15 %.

7. Procédé selon la revendication 6, l'additif végétal broyé présentant une humidité résiduelle de 15 %.

8. Composition prête à l'emploi pour la fabrication de matières de construction avec un additif végétal selon l'une quelconque des revendications 1 à 7, contenant
(a) 1000 l d'additif végétal d'un poids spécifique de 70 à 160 kg/m³,
(b) un minéralisateur à 20 % pour le ciment Portland 52.5 ou à 10 % pour la chaux-ciment Portland 52.5 et
(c) de 200 à 260 kg d'agent liant sur base de ciment,
le minéralisateur étant constitué de roche gypsifère et la roche gypsifère contenant jusqu'à 30 % de quartz sous forme pulvérulente.

9. Composition finie selon la revendication 8, contenant par ailleurs (d) de 250 à 400 l d'eau de gâchage.

10. Composition finie selon la revendication 8 ou la revendication 9 pour la fabrication de matériaux de construction tels que du béton léger, du mortier léger, de la chape légère ainsi que de l'enduit léger et de l'enduit calorifuge, des murs extérieurs pour des immeubles d'habitation, des panneaux préfabriqués et des couches d'absorption pour des parois insonorisantes.
